# FASCICULE DE BREVET EUROPEEN

(11) **EP 3 223 392 B1**
(45) Date de publication et mention de la délivrance du brevet: **01.04.2020**
(21) Numéro de dépôt: 17157209.2
(22) Date de dépôt: 21.02.2017
(51) Int. Cl.: H02K 1/27

(54) **MACHINE ELECTRIQUE TOURNANTE AYANT UNE CONFIGURATION MINIMISANT LES ONDULATIONS DE COUPLE**
ELEKTRISCH UMLAUFENDE MASCHINE MIT EINER KONFIGURATION, DIE DIE DREHMOMENTSCHWINGUNGEN VERRINGERT
ROTATING ELECTRICAL MACHINE HAVING A CONFIGURATION MINIMIZING TORQUE RIPPLE

(30) Priorité: 25.03.2016 FR 1652591
(43) Date de publication de la demande: 27.09.2017
(73) Titulaire: VALEO EQUIPEMENTS ELECTRIQUES MOTEUR, 94046 Créteil Cedex (FR)
(72) Inventeur: LEGRANGER, Jérome, 94000 CRETEIL (FR); EL BARAKA, Khadija, 77700 SERRIS (FR); JUGOVIC, Svetislav, 91200 ATHIS-MONS (FR)
(74) Mandataire: Cardon, Nicolas

(56) Documents cités:
- EP-A2- 2 863 518
- EP-A2- 2 892 128
- DE-A1-102014 002 100
- US-A1- 2008 030 093
- US-A1- 2010 289 370
- US-A1- 2011 043 070

## Description

L'invention porte sur une machine électrique tournante ayant une configuration minimisant les ondulations de couple. L'invention trouve une application particulièrement avantageuse, mais non exclusive, avec les machines électriques réversibles de forte puissance pouvant fonctionner en mode alternateur et en mode moteur.

De façon connue en soi, les machines électriques tournantes comportent un stator et un rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le stator comporte un corps muni d'une pluralité de dents définissant des d'encoches, et un bobinage inséré dans les encoches du stator. Le bobinage est obtenu par exemple à partir de fils continus recouverts d'émail ou à partir d'éléments conducteurs en forme d'épingles reliées entre elles par soudage. Alternativement, les phases de la machine sont formées à partir de bobines individuelles enroulées chacune autour d'une dent statorique. Les phases connectées en étoile ou en triangle comportent des sorties reliées à un module électrique de commande.

Par ailleurs, le rotor comporte un corps formé par un empilage de feuilles de tôles maintenues sous forme de paquet au moyen d'un système de fixation adapté. Le rotor comporte des pôles formés par des aimants permanents logés dans des cavités délimitées chacune par deux dents rotoriques adjacentes.

DE102014002100 divulgue un moteur synchrone destiné à être utilisé comme servomoteur, par exemple dans un véhicule, qui présente un rotor formé d'une partie ou d'un contour extérieur entier, qui correspond au pôle, en forme courbe par fonction trigonométrique ou approchée par fonction trigonométrique. US2008030093 divulgue un moteur électrique synchrone avec des aimants permanents, dans lequel la forme d'onde de la tension induite est plus proche de la courbe sinusoïdale que l'art antérieur, pour réduire l'ondulation du couple. EP2863518 divulgue une machine à aimants permanents du type a rayons comprenant un entrefer ayant une distance non uniforme entre la surface extérieure des rayons et la surface intérieure du rotor.

On observe une variation du couple fourni autour du couple moyen de la machine. Cette variation de couple est due à l'interaction entre le rotor et le stator et dépend notamment de la saturation magnétique de la machine. Cette variation de couple engendre des problèmes de bruit, notamment lorsque la machine électrique est accouplée avec un élément externe par l'intermédiaire d'un engrenage.

L'invention vise à remédier à cet inconvénient en proposant une machine électrique tournante, notamment pour véhicule automobile, comportant:
- un stator comportant un corps de stator muni d'une pluralité de dents statoriques définissant une pluralité d'encoches, et un bobinage statorique inséré dans lesdites encoches,
- un rotor ayant un axe de rotation, et comportant une pluralité de dents rotoriques définissant des cavités dans lesquelles sont logés des aimants permanents, ledit rotor comportant un ensemble de pôles magnétiques, caractérisée en ce que ledit rotor est inscrit dans un cylindre de révolution ayant un rayon externe,
chaque dent rotorique comportant:
- un axe de symétrie passant par l'axe de rotation dudit rotor,
- une face externe en vis-à-vis d'une périphérie interne dudit stator,
- dans un plan radial par rapport à l'axe de rotation,
- ladite face externe présentant une courbure en arc de cercle, l'arc de cercle étant défini par:
   - un centre situé sur ledit axe de symétrie,
   - un premier point situé à une intersection entre ledit axe de symétrie et un cercle centré sur ledit axe de rotation et dont un rayon est ledit rayon externe, et
   - un deuxième point situé sur un axe passant par ledit axe de rotation du rotor et formant un angle de 360 degrés divisé par un nombre égal à deux fois le nombre de pôles magnétiques par rapport audit axe de symétrie,
   ledit deuxième point étant situé à une distance dudit axe de rotation du rotor égale au rayon externe diminué d'un écart, et
   un ratio entre ledit écart et ledit rayon externe est compris entre 0,015 et 0,07.

La définition d'un tel ratio permet d'obtenir un compromis optimum entre le couple fourni par la machine et le niveau d'ondulation en couple correspondant. L'invention permet ainsi d'améliorer les performances magnétiques et acoustiques de la machine électrique tournante.

Selon une réalisation, ladite machine électrique tournante comprend un nombre d'encoche par pôle et par phase égal à 0,5.

Selon une réalisation, ledit stator comprend un pas dentaire statorique égal à 360 degrés divisé par le nombre de dents statoriques, et dans un plan radial par rapport à l'axe de rotation du rotor, une ouverture dentaire rotorique est égale à un angle entre deux droites passant chacune par l'axe de rotation du rotor et une extrémité orthoradiale de la face externe, et un ratio de l'ouverture dentaire rotorique en degrés divisé par ledit pas dentaire statorique en degrés est compris entre 0,8 et 1,2.

La définition d'un tel ratio permet d'obtenir un compromis optimum entre le couple fourni par la machine et le niveau d'ondulation en couple correspondant.

Selon une réalisation, un ratio entre un diamètre intérieur dudit stator, exprimé en mm, et un nombre de paires de pôles rotoriques est compris entre 12 et 22, notamment entre 13 et 21, par exemple entre 14 et 20.

La définition d'un tel ratio permet d'obtenir un compromis optimum entre le couple fourni par la machine et le niveau d'ondulation en couple correspondant.

Selon une réalisation, le stator est muni de pieds de dent du côté des extrémités libres des dents statoriques, chaque pied de dent s'étendant circonférentiellement de part et d'autre d'une dent statorique correspondante. Selon une réalisation, chaque pied de dent s'étend circonférentiellement selon un arc de cercle centré sur l'axe de rotation du rotor.

Selon une réalisation, le rotor comporte un corps formé par un empilement axial de tôles magnétiques.

Selon une réalisation, le corps de rotor comporte une âme centrale.

Selon une réalisation, dans un plan orthogonal à l'axe de rotation du rotor, chaque dent rotorique comportant une première portion globalement de largeur constante, issue de l'âme centrale prolongée par une deuxième portion s'évasant en direction opposée à l'axe X et terminée par une lèvre de maintien.

De manière surprenante, cette configuration particulière de la machine, en combinaison avec au moins l'un des ratios précédents, permet de réduire encore l'ondulation de couple.

Selon une réalisation, ledit bobinage statorique est formé par un ensemble de bobines enroulées chacune autour d'une dent statorique.

Selon une réalisation, ledit rotor est emmanché sur un arbre.

Selon une réalisation, ledit corps de stator et ledit rotor sont formés chacun par un paquet de tôles.

Selon une réalisation, un nombre de paires de pôles est égal à cinq.

Selon une réalisation, un nombre de paires de pôles est égal à six.

Selon une réalisation, un diamètre intérieur dudit corps de stator est compris entre 60mm et 115mm.

Selon une réalisation, un diamètre intérieur dudit corps de stator est compris entre 70mm et 100mm.

Selon une réalisation, un diamètre extérieur dudit corps de stator est compris entre 100mm et 150mm.

Selon une réalisation, ledit rayon externe dudit cylindre de révolution dans lequel est inscrit ledit rotor est sensiblement égal à 34mm.

Selon une réalisation, une ouverture dentaire rotorique est de l'ordre de 24 degrés.

Selon une réalisation, une ouverture dentaire statorique est de l'ordre de 20 degrés.

Selon une réalisation, lesdits aimants permanents présentent chacun une extrémité biseautée située du côté dudit axe de rotation.

Selon une réalisation, ledit rotor est à concentration de flux.

L'invention sera mieux comprise à la lecture de la description qui suit et à l'examen des figures qui l'accompagnent. Ces figures ne sont données qu'à titre illustratif mais nullement limitatif de l'invention.
La figure 1 montre une vue en coupe transversale de la machine électrique tournante selon la présente invention;
Les figures 2a à 2c sont des vues partielles du rotor illustrant la manière de réaliser certaines mesures d'angles et de longueurs intervenant dans le calcul des ratios selon la présente invention;
La figure 3 est une vue partielle du rotor illustrant la courbure en arc de cercle d'une dent rotorique selon la présente invention;
La figure 4 montre des représentations graphiques de l'évolution du taux d'ondulation en fonction du premier ratio selon la présente invention respectivement pour deux valeurs de diamètre extérieur du stator;
La figure 5 est une représentation graphique de valeurs de taux d'ondulation obtenues pour différentes valeurs du deuxième ratio selon la présente invention;
La figure 6 est une représentation graphique de l'évolution du taux d'ondulation en fonction du troisième ratio selon la présente invention respectivement pour deux valeurs de diamètre extérieur du stator.

Les éléments identiques, similaires ou analogues conservent la même référence d'une figure à l'autre.

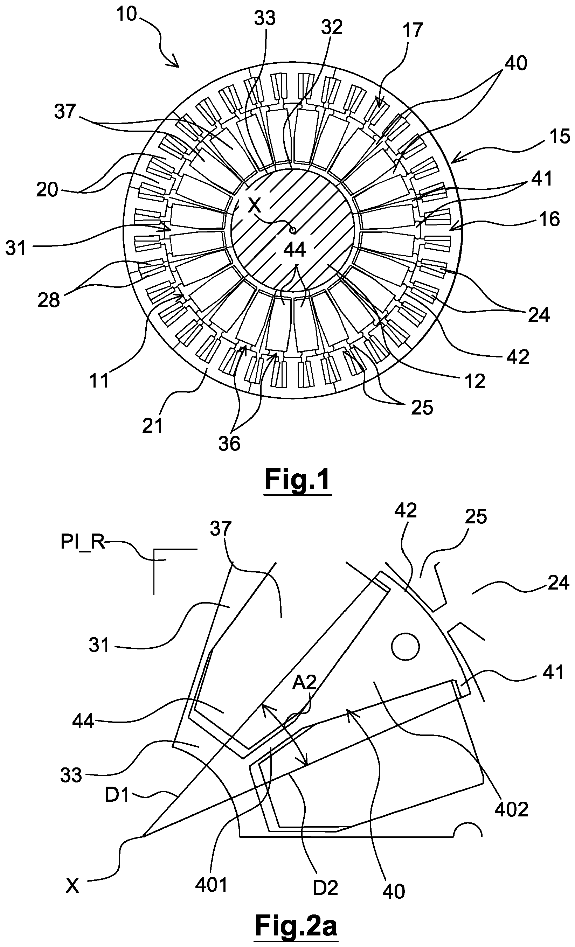

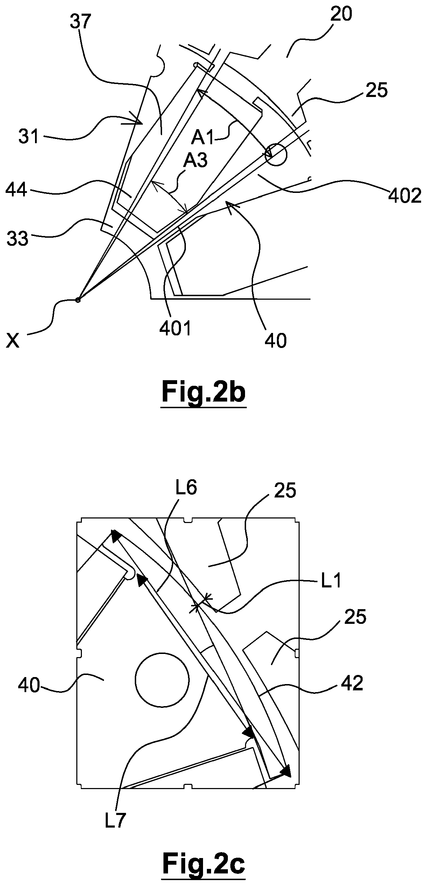

La figure 1 montre une machine électrique tournante 10 comportant un rotor 11 ayant un axe de rotation X et destiné à être monté sur un arbre 12. Un stator bobiné 15, qui pourra être polyphasé, entoure le rotor 11 avec présence d'un entrefer L1 entre la périphérie externe du rotor 11 et la périphérie interne du stator 15 (cf. figure 2c). Ce stator 15 est fixé sur un carter configuré pour porter à rotation l'arbre 12 via des roulements à billes et/ou à aiguilles.

Plus précisément, le stator 15 comporte un corps 16 et un bobinage 17. Le corps de stator 16 consiste en un empilement axial de tôles planes. Le corps 16 comporte des dents 20 réparties angulairement de manière régulière sur une périphérie interne d'une culasse 21. Ces dents 20 délimitent des encoches 24, de telle façon que chaque encoche 24 est délimitée par deux dents 20 successives. La culasse 21 correspond ainsi à la portion annulaire externe pleine du corps 16 qui s'étend entre le fond des encoches 24 et la périphérie externe du stator 15.

Les encoches 24 débouchent axialement dans les faces d'extrémité axiales du corps 16. Les encoches 24 sont également ouvertes radialement vers l'intérieur du corps 16.

Le stator 15 est muni de pieds de dent 25 du côté des extrémités libres des dents 20. Chaque pied de dent 25 s'étend circonférentiellement de part et d'autre d'une dent 20 correspondante. Chaque pied de dent 25 s'étend circonférentiellement selon un arc de cercle centré sur l'axe de rotation X.

Pour obtenir le bobinage 17, plusieurs phases sont formées par des bobines 28 enroulées chacune autour d'une dent 20. Chaque bobine 28 est formée à partir à partir d'un fil électriquement conducteur recouvert d'une couche de matériau électriquement isolant tel que de l'émail. Dans un exemple de réalisation, un isolant de bobine pourra être intercalé entre chaque bobine 28 et la dent 20 correspondante.

Par ailleurs, le rotor 11 comporte un corps 31 formé par un empilement axial de tôles planes afin de diminuer les courants de Foucault. Le corps 31 est réalisé en matière ferromagnétique. Le corps 31 peut être lié en rotation à l'arbre 12 de la machine électrique tournante de différentes manières, par exemple par emmanchement en force de l'arbre 12 cannelé à l'intérieur de l'ouverture centrale 32 du rotor réalisée dans l'âme 33.

Le rotor 11 comporte des cavités 36 destinées à recevoir des aimants permanents 37 formant des pôles magnétiques. Chaque cavité 36 traverse le corps 31 d'une face d'extrémité axiale à l'autre et est ouverte du côté de la périphérie externe du rotor 11. En l'occurrence, les cavités 36 sont délimitées chacune par deux dents 40 adjacentes issues de l'âme centrale 33 du rotor.

En variante, les cavités 36 pourront être borgnes. Afin d'assurer une retenue radiale des aimants 37 dans les cavités 36, les dents 40 comportent chacune à leur extrémité libre une lèvre de maintien 41 s'étendant circonférentiellement de part et d'autre des dents 40.

Chaque aimant 37 a une forme parallélépipédique ayant deux angles biseautés. Les aimants 37 présentent ainsi une section réduite à une de leurs extrémités, de telle façon que cette extrémité référencée 44 présente une forme trapézoïdale. L'extrémité biseautée des aimants 37 est située du côté de la périphérie interne du rotor 11, c'est-à-dire du côté de l'axe X. En variante, l'extrémité biseautée pourra être positionnée du côté opposé, c'est-à-dire du côté de l'entrefer L1.

Afin que les cavités 36 présentent une forme complémentaire des aimants 37, chaque dent rotorique 40 comporte une première portion 401, globalement de largeur constante, issue de l'âme 33 prolongée par une deuxième portion 402 s'évasant en direction opposée à l'axe X et terminée par une lèvre de maintien 41. Chaque dent 40 comporte une face externe 42, correspondant en l'occurrence à la face externe de la lèvre 41, située en vis-à-vis de la périphérie interne du stator 15.

Les aimants 37 sont de préférence réalisés en ferrite. En variante, ils pourront toutefois être réalisés en terre rare selon les applications et la puissance recherchée de la machine 10. En variante, les aimants 37 peuvent être de nuance différente pour réduire les coûts. Par exemple, dans chaque cavité 36, on associe un aimant 37 en ferrite et un aimant en terre rare plus puissant mais plus coûteux. Certaines cavités 36 pourront également être laissées vides en fonction de la puissance recherchée. Le rotor 11 est à concentration de flux, c'est-à-dire que les faces latérales en vis-à-vis des aimants 37 situés dans deux encoches consécutives sont de même polarité.

De préférence, la machine 10 présente un nombre d'encoche par pôle et par phase égal à 0,5.

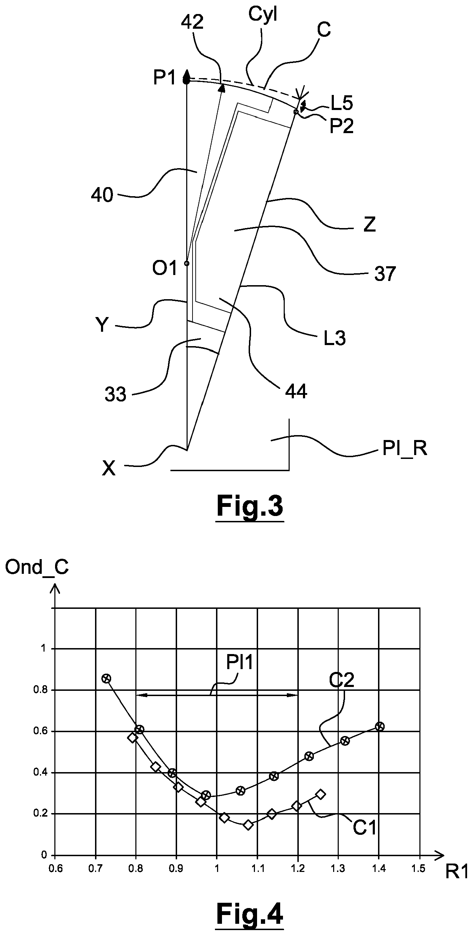

On définit le pas dentaire statorique A1 comme étant égal à 360° divisé par le nombre de dents statoriques 20 (cf. figure 2b). En outre, dans un plan radial PI_R par rapport à l'axe X, une ouverture dentaire rotorique A2 du rotor 11 est égale à l'angle entre deux droites D1 et D2 passant chacune par l'axe de rotation X et une extrémité orthoradiale de la face externe 42 d'une dent 40 correspondante (cf. figure 2a). Comme cela ressort du graphique de la figure 4, afin de minimiser l'ondulation de couple (Ond_C), le ratio R1 de l'ouverture dentaire rotorique A2 exprimé en degrés divisé par le pas dentaire statorique A1 exprimé en degrés, soit R1=A2/A1, est situé dans une plage PI1 comprise entre 0,8 et 1,2. L'ondulation de couple Ond_C est égale au rapport de l'écart entre le maximum et le minimum de couple divisé par le couple moyen fourni par la machine 10. On précise que la courbe C1 de la figure 4 a été obtenue pour un diamètre extérieur L8 du stator égal à 104mm et que la courbe C2 a été obtenue pour un diamètre extérieur L8 du stator égal à 150mm.

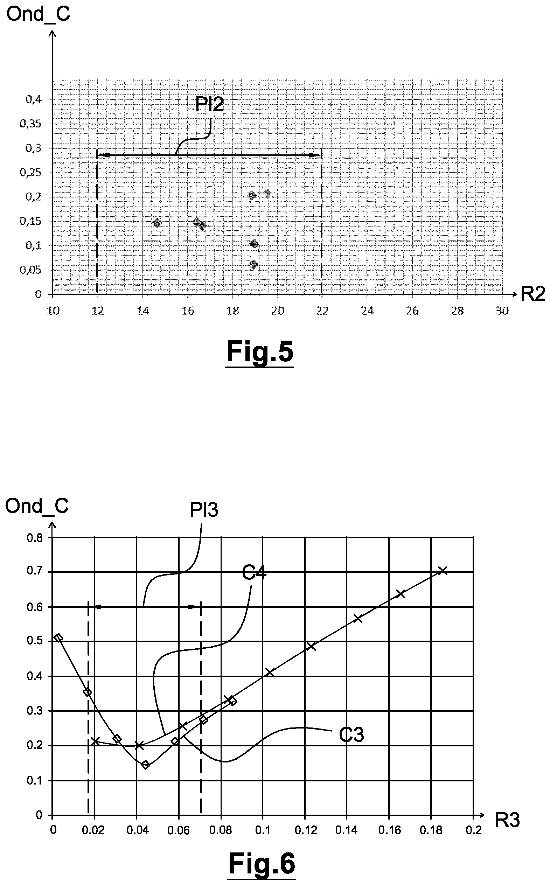

Par ailleurs, on définit un ratio R2 égal à un diamètre intérieur du stator L2, exprimé en mm, divisé par un nombre de paires de pôles p rotoriques, soit R2=L2/p. Comme cela ressort de la figure 5, le ratio préférentiel R2 est située dans une plage PI2 comprise entre 12 et 22, notamment entre 13 et 21, par exemple entre 14 et 20. On précise que les points de la figure 5 ont été obtenus pour un diamètre intérieur du stator compris entre 73mm et 100mm et pour un nombre de paires de pôles rotoriques égal à 5 ou à 6.

Comme cela est illustré par la figure 3, le rotor 11 est inscrit dans un cylindre de révolution Cyl ayant un rayon externe L3. En outre, chaque dent rotorique 40 comporte un axe de symétrie Y passant par l'axe de rotation X du rotor 11. Dans un plan radial PI_R par rapport à l'axe X correspondant au plan de la feuille, la face externe 42 de chaque dent 40 présente une courbure en arc de cercle. Chaque dent rotorique 40 présente deux arcs de cercle symétriques par rapport à l'axe de symétrie Y.

Chaque arc de cercle est défini par un centre O1 situé sur l'axe de symétrie Y, un premier point P1 situé à l'intersection entre l'axe de symétrie Y et le cercle C centré sur l'axe de rotation X et dont le rayon est le rayon externe L3 du cylindre Cyl et un deuxième point P2 situé sur un axe Z passant par l'axe de rotation X. L'axe Z forme un angle prédéterminé par rapport à l'axe de symétrie Y. L'angle prédéterminé est égal à 360° divisé par un nombre égal à deux fois le nombre de pôles. L'angle prédéterminé pourra avoir une valeur égale à plus ou moins 5% par rapport à la valeur susmentionnée. Le deuxième point P2 est situé à une distance de l'axe X égale au rayon externe L3 diminué d'un écart L5.

Comme cela ressort de la figure 6, le ratio R3 entre l'écart L5 et le rayon externe L3 est situé dans une plage PI3 comprise entre 0,015 et 0,07. On précise que la courbe C3 de la figure 6 a été obtenue pour un diamètre extérieur L8 du stator égal à 104mm et que la courbe C4 a été obtenue pour un diamètre extérieur L8 du stator égal à 150mm.

Les plages préférentielles des différents ratios R1, R2, R3 ont un effet sur les performances de la machine 10 indépendamment les uns des autres. Il est toutefois intéressant de noter qu'une machine électrique vérifiant les trois ratios présentera des performances magnétiques et mécaniques optimum.

Dans un exemple de réalisation, l'ouverture dentaire rotorique A2 est de l'ordre de 24 degrés. L'ouverture dentaire statorique A3 est de l'ordre de 20 degrés. Le nombre de paires de pôles p est égal à cinq.

La largeur en haut d'un pole rotorique correspondant à la dimension L6 orthoradiale mesurée entre les extrémités d'une lèvre 41 est de l'ordre de 14mm. La largeur sous la lèvre 41 correspondant à la dimension orthoradiale L7 mesurée est de l'ordre de 10mm.

L'écart L5 est de l'ordre de 1 mm. L'entrefer L1 est de l'ordre de 0.4mm. Le rayon externe L3 du cylindre de révolution dans lequel est inscrit le rotor 11 est sensiblement égal à 34 mm.

Le ratio R1 est de l'ordre de 1. Le ratio R2 est de l'ordre de 13. Le ratio R3 est de l'ordre de 3%.

Par ailleurs, le diamètre intérieur L2 du corps de stator 16 est compris entre 60mm et 115mm. Le diamètre intérieur L2 pourra valoir dans un exemple particulier 73mm. Le diamètre extérieur L8 du corps de stator 16 est compris entre 100mm et 150 mm. Le diamètre extérieur L8 pourra valoir dans un exemple particulier 104mm.

Par "de l'ordre de", on entend des valeurs pouvant être située dans une plage ayant comme borne inférieure la valeur indiquée moins 10% de cette valeur et comme borne supérieure la valeur indiquée plus 10% de cette valeur.

Bien entendu, la description qui précède a été donnée à titre d'exemple uniquement et ne limite pas le domaine de l'invention dont on ne sortirait pas en remplaçant les différents éléments par tous autres équivalents.

## Revendications

1. Machine électrique tournante (10), notamment pour véhicule automobile, comportant:
- un stator (15) comportant un corps de stator (16) muni d'une pluralité de dents statoriques (20) définissant une pluralité d'encoches (24), et un bobinage statorique (17) inséré dans lesdites encoches (24),
- un rotor (11) ayant un axe de rotation (X), et comportant une pluralité de dents rotoriques (40) définissant des cavités (36) dans lesquelles sont logés des aimants permanents (37), ledit rotor (11) comportant un ensemble de pôles magnétiques, ledit rotor (11) étant inscrit dans un cylindre de révolution ayant un rayon externe (L3),
chaque dent rotorique (40) comportant:
- un axe de symétrie (Y) passant par l'axe de rotation (X) dudit rotor,
- une face externe (42) en vis-à-vis d'une périphérie interne dudit stator (15),
- dans un plan radial (PI_R) par rapport à l'axe de rotation (X),
- ladite face externe (42) présentant une courbure en arc de cercle, l'arc de cercle étant défini par:
- un centre (O1) situé sur ledit axe de symétrie (Y),
- un premier point (P1) situé à une intersection entre ledit axe de symétrie (Y) et un cercle centré sur ledit axe de rotation (X) et dont un rayon est ledit rayon externe (L3), et
- un deuxième point (P2) situé sur un axe (Z) passant par ledit axe de rotation (X) du rotor et formant un angle de 360 degrés divisé par un nombre égal à deux fois le nombre de pôles magnétiques par rapport audit axe de symétrie (Y),
ledit deuxième point (P2) étant situé à une distance dudit axe de rotation (X) du rotor égale au rayon externe (L3) diminué d'un écart (L5), et
un ratio (R3) entre ledit écart (L5) et ledit rayon externe (L3) est compris entre 0,015 et 0,07,
un ratio (R2) entre un diamètre intérieur (L2) dudit stator (15), exprimé en mm, et un nombre de paires de pôles rotoriques (p) étant compris entre 12 et 22, notamment entre 13 et 21, par exemple entre 14 et 20.

2. Machine électrique tournante selon la revendication 1, **caractérisée** en ce en ce qu'elle comprend un nombre d'encoche par pôle et par phase égal à 0,5.

3. Machine électrique tournante selon la revendication 1 ou 2, **caractérisée en ce que**:
- ledit stator (15) comprend un pas dentaire statorique (A1) égal à 360 degrés divisé par le nombre de dents statoriques (20),
- dans un plan radial (PI_R) par rapport à l'axe de rotation (X) du rotor, une ouverture dentaire rotorique (A2) est égale à un angle entre deux droites (D1, D2) passant chacune par l'axe de rotation (X) du rotor et une extrémité orthoradiale de la face externe (42), et
- un ratio (R1) de l'ouverture dentaire rotorique (A2) en degrés divisé par ledit pas dentaire statorique (A1) en degrés est compris entre 0,8 et 1,2.

4. Machine électrique tournante selon l'une quelconque des revendications 1 à 3, **caractérisée en ce que** ledit bobinage statorique (17) est formé par un ensemble de bobines (28) enroulées chacune autour d'une dent statorique (20).

5. Machine électrique tournante selon l'une quelconque des revendications 1 à 4, **caractérisée en ce que** ledit rotor (11) est emmanché sur un arbre (12).

6. Machine électrique tournante selon l'une quelconque des revendications 1 à 5, **caractérisée en ce que** ledit corps de stator (16) et ledit rotor (11) sont formés chacun par un paquet de tôles.

7. Machine électrique tournante selon l'une quelconque des revendications 1 à 6, **caractérisée en ce qu'**un nombre de paires de pôles est égal à cinq.

8. Machine électrique tournante selon l'une quelconque des revendications 1 à 7, **caractérisée en ce qu'**un diamètre intérieur (L2) dudit corps de stator (16) est compris entre 60mm et 115mm.

9. Machine électrique tournante selon l'une quelconque des revendications 1 à 8, **caractérisée en ce qu'**un diamètre extérieur (L8) dudit corps de stator est compris entre 100mm et 150mm.

10. Machine électrique tournante selon l'une quelconque des revendications 1 à 9, **caractérisée en ce que** ledit rayon externe (L3) dudit cylindre de révolution (Cyl) dans lequel est inscrit ledit rotor (11) est sensiblement égal à 34mm.

11. Machine électrique selon l'une quelconque des revendications 1 à 10, **caractérisée en ce qu'**une ouverture dentaire rotorique (A2) est de l'ordre de 24 degrés.

12. Machine électrique selon l'une quelconque des revendications 1 à 11, **caractérisée en ce qu'**une ouverture dentaire statorique (A3) est de l'ordre de 20 degrés.

13. Machine électrique tournante selon l'une quelconque des revendications 1 à 12, **caractérisée en ce que** lesdits aimants permanents (37) présentent chacun une extrémité biseautée (44) située du côté dudit axe de rotation (X).

14. Machine électrique tournante selon l'une quelconque des revendications 1 à 13, **caractérisée en ce que** ledit rotor (11) est à concentration de flux.

## Patentansprüche

1. Umlaufende elektrische Maschine (10), insbesondere für ein Kraftfahrzeug, umfassend:
- einen Stator (15), welcher einen Statorkörper (16), welcher mit einer Vielzahl von Statorzähnen (20) versehen ist, welche eine Vielzahl von Nuten (24) definieren, und eine Statorwicklung (17) umfasst, welche in die Nuten (24) eingesetzt ist,
- einen Rotor (11), welcher eine Drehachse (X) aufweist und eine Vielzahl von Rotorzähnen (40) umfasst, welche Hohlräume (36) definieren, in welchen Permanentmagnete (37) untergebracht sind, wobei der Rotor (11) eine Menge an Magnetpolen umfasst,
wobei der Rotor (11) in einen kreisförmigen Zylinder mit einem äußeren Radius (L3) eingetragen ist, wobei jeder Rotorzahn (40) umfasst:
- eine Symmetrieachse (Y), welche durch die Drehachse (X) des Rotors verläuft,
- eine einem inneren Umfang des Stators (15) gegenüber liegende äußere Fläche (42),
- in einer radialen Ebene (PI_R) in Bezug auf die Drehachse (X),
- wobei die äußere Fläche (42) eine kreisbogenförmige Krümmung aufweist, wobei der Kreisbogen definiert ist durch:
- ein Zentrum (O1), welches sich auf der Symmetrieachse (Y) befindet,
- einen ersten Punkt (P1), welcher sich an einem Schnittpunkt zwischen der Symmetrieachse (Y) und einem Kreis, welcher auf die Drehachse (X) zentriert ist und dessen Radius der äußere Radius (L3) ist, und
- einen zweiten Punkt (P2), welcher sich auf einer Achse (Z) befindet, welche durch die Drehachse (X) des Rotors verläuft und einen Winkel von 360 Grad geteilt durch eine Zahl gleich dem Doppelten der Anzahl von Magnetpolen in Bezug auf die Symmetrieachse (Y) bildet, wobei sich der zweite Punkt (P2) in einer Entfernung von der Drehachse (X) des Rotors befindet, welche gleich dem um einen Abstand (L5) verminderten äußeren Radius (L3) ist, und
ein Verhältnis (R3) zwischen dem Abstand (L5) und dem äußeren Radius (L3) zwischen 0,015 und 0,07 liegt,
ein Verhältnis (R2) zwischen einem inneren Durchmesser (L2) des Stators (15), welcher in mm ausgedrückt ist, und einer Anzahl von Rotorpolpaaren (p) zwischen 12 und 22 liegt, insbesondere zwischen 13 und 21, zum Beispiel zwischen 14 und 20.

2. Umlaufende elektrische Maschine nach Anspruch 1, **dadurch gekennzeichnet, dass** sie eine Anzahl von Nuten pro Pol und pro Phase von gleich 0,5 umfasst.

3. Umlaufende elektrische Maschine nach Anspruch 1 oder 2, **dadurch gekennzeichnet, dass**:
- der Stator (15) eine Statorzahnteilung (A1) aufweist, welche gleich 360 Grad geteilt durch die Anzahl von Statorzähnen (20) ist,
- in einer radialen Ebene (PI_R) in Bezug auf die Drehachse (X) des Rotors eine Rotorzahnöffnung (A2) gleich einem Winkel zwischen zwei Geraden (D1, D2) ist, welche jeweils durch die Drehachse (X) des Rotors und ein orthoradiales Ende der äußeren Fläche (42) verlaufen, und
- ein Verhältnis (R1) der Rotorzahnöffnung (A2) in Grad geteilt durch die Statorzahnteilung (A1) in Grad zwischen 0,8 und 1,2 liegt.

4. Umlaufende elektrische Maschine nach einem der Ansprüche 1 bis 3, **dadurch gekennzeichnet, dass** die Statorwicklung (17) durch eine Menge von Spulen (28) gebildet wird, welche jeweils um einen Statorzahn (20) herum gewickelt sind.

5. Umlaufende elektrische Maschine nach einem der Ansprüche 1 bis 4, **dadurch gekennzeichnet, dass** der Rotor (11) auf eine Welle (12) aufgesetzt ist.

6. Umlaufende elektrische Maschine nach einem der Ansprüche 1 bis 5, **dadurch gekennzeichnet, dass** der Statorkörper (16) und der Rotor (11) jeweils durch ein Blechpaket gebildet sind.

7. Umlaufende elektrische Maschine nach einem der Ansprüche 1 bis 6, **dadurch gekennzeichnet, dass** eine Anzahl von Polpaaren gleich fünf ist.

8. Umlaufende elektrische Maschine nach einem der Ansprüche 1 bis 7, **dadurch gekennzeichnet, dass** ein innerer Durchmesser (L2) des Statorkörpers (16) zwischen 60mm und 115mm liegt.

9. Umlaufende elektrische Maschine nach einem der Ansprüche 1 bis 8, **dadurch gekennzeichnet, dass** ein äußerer Durchmesser (L8) des Statorkörpers zwischen 100mm und 150mm liegt.

10. Umlaufende elektrische Maschine nach einem der Ansprüche 1 bis 9, **dadurch gekennzeichnet, dass** der äußere Radius (L3) des Drehzylinders (Cyl), in welchen der Rotor (11) eingetragen ist, im Wesentlichen gleich 34mm ist.

11. Umlaufende elektrische Maschine nach einem der Ansprüche 1 bis 10, **dadurch gekennzeichnet, dass** eine Rotorzahnöffnung (A2) in der Größenordnung von 24 Grad liegt.

12. Umlaufende elektrische Maschine nach einem der Ansprüche 1 bis 11, **dadurch gekennzeichnet, dass** eine Statorzahnöffnung (A3) in der Größenordnung von 20 Grad liegt.

13. Umlaufende elektrische Maschine nach einem der Ansprüche 1 bis 12, **dadurch gekennzeichnet, dass** die Permanentmagnete (37) jeweils ein abgeschrägtes Ende (44) aufweisen, welches sich auf der Seite der Drehachse (X) befindet.

14. Umlaufende elektrische Maschine nach einem der Ansprüche 1 bis 13, **dadurch gekennzeichnet, dass** der Rotor (11) mit Flusskonzentration ist.

## Claims

1. Rotating electric machine (10), particularly for a motor vehicle, comprising:
- a stator (15) comprising a stator body (16) provided with a plurality of stator teeth (20) defining a plurality of notches (24), and a stator winding (17) inserted in said notches (24),
- a rotor (11) having an axis (X) of rotation, and comprising a plurality of rotor teeth (40) defining cavities (36) in which permanent magnets (37) are accommodated, said rotor (11) comprising an array of magnetic poles,
said rotor (11) being inscribed in an axisymmetric cylinder having an external radius (L3),
each rotor tooth (40) comprising:
- an axis (Y) of symmetry passing via the axis (X) of rotation of said rotor,
- an external face (42) facing an internal periphery of said stator (15),
in a radial plane (PI_R) relative to the axis (X) of rotation,
said external face (42) having a curvature in the form of an arc of a circle, the arc of a circle being defined by:
- a centre (O1) located on said axis (Y) of symmetry,
- a first point (P1) located at an intersection between said axis (Y) of symmetry and a circle centred on said axis (X) of rotation and a radius of which is said external radius (L3), and
- a second point (P2) located on an axis (Z) passing via said axis (X) of rotation of the rotor and forming an angle of 360 degrees divided by a number equal to twice the number of magnetic poles relative to said axis (Y) of symmetry,
said second point (P2) being located at a distance from said axis (X) of rotation of the rotor equal to the external radius (L3) minus a space (L5), and
a ratio (R3) between said space (L5) and said external radius (L3) is between 0.015 and 0.07,
a ratio (R2) between an inside diameter (L2) of said stator (15), expressed in mm, and a number of pairs of rotor poles (p) being between 12 and 22, particularly between 13 and 21, for example between 14 and 20.

2. Rotating electric machine according to Claim 1, **characterized in that** it comprises a number of notches per pole and per phase equal to 0.5.

3. Rotating electric machine according to Claim 1 or 2, **characterized in that**:
- said stator (15) comprises a stator tooth pitch (A1) equal to 360 degrees divided by the number of stator teeth (20),
- in a radial plane (PI_R) relative to the axis (X) of rotation of the rotor, a rotor tooth opening (A2) is equal to an angle between two straight lines (D1, D2) each passing via the axis (X) of rotation of the rotor and an orthoradial end of the external face (42), and
- a ratio (R1) of the rotor tooth opening (A2) in degrees divided by said stator tooth pitch (A1) in degrees is between 0.8 and 1.2.

4. Rotating electric machine according to any one of Claims 1 to 3, **characterized in that** said stator winding (17) is formed by an array of coils (28) each wound about a stator tooth (20).

5. Rotating electric machine according to any one of Claims 1 to 4, **characterized in that** said rotor (11) is pushed onto a shaft (12).

6. Rotating electric machine according to any one of Claims 1 to 5, **characterized in that** said stator body (16) and said rotor (11) are each formed by a pack of metal sheets.

7. Rotating electric machine according to any one of Claims 1 to 6, **characterized in that** a number of pairs of poles is equal to five.

8. Rotating electric machine according to any one of Claims 1 to 7, **characterized in that** an inside diameter (L2) of said stator body (16) is between 60 mm and 115 mm.

9. Rotating electric machine according to any one of Claims 1 to 8, **characterized in that** an outside diameter (L8) of said stator body is between 100 mm and 150 mm.

10. Rotating electric machine according to any one of Claims 1 to 9, **characterized in that** said external radius (L3) of said axisymmetric cylinder (Cyl) in which said rotor (11) is inscribed is substantially equal to 34 mm.

11. Electric machine according to any one of Claims 1 to 10, **characterized in that** a rotor tooth opening (A2) is of the order of 24 degrees.

12. Electric machine according to any one of Claims 1 to 11, **characterized in that** a stator tooth opening (A3) is of the order of 20 degrees.

13. Rotating electric machine according to any one of Claims 1 to 12, **characterized in that** said permanent magnets (37) each have a bevelled end (44) located on the side of said axis (X) of rotation.

14. Rotating electric machine according to any one of Claims 1 to 13, **characterized in that** said rotor (11) is a flux concentration rotor.
